# EUROPÄISCHE PATENTSCHRIFT

(11) **EP 3 805 150 B1**
(45) Veröffentlichungstag und Bekanntmachung des Hinweises auf die Patenterteilung: **17.08.2022**
(21) Anmeldenummer: 19202819.9
(22) Anmeldetag: 11.10.2019
(51) Int. Cl.: C01B 7/01, C01B 7/07, C02F 1/467, B01D 53/14, B01D 53/68

(54) **VERFAHREN ZUR FREISETZUNG VON CHLORGAS AUS POLYCHLORIDBASIERTEN-SPEICHERMEDIEN MITTELS CHLORFREISETZUNGSMITTELN UND NUTZUNG IN CHEMISCHEN REAKTIONEN**
METHOD FOR RELEASING CHLORINE GAS FROM POLYCHLORIDE-BASED STORAGE MEDIA USING CHLORINE-RELEASING AGENTS AND USE IN CHEMICAL REACTIONS
PROCÉDÉ DE LIBÉRATION DU CHLORE GAZEUX DES SUPPORTS DE STOCKAGE À BASE DE CHLOROFIBRE AU MOYEN DES MILIEUX DE DÉGAGEMENT DE CHLORE ET UTILISATION DANS DES RÉACTIONS CHIMIQUES

(43) Veröffentlichungstag der Anmeldung: 14.04.2021
(73) Patentinhaber: Covestro Deutschland AG, 51373 Leverkusen (DE)
(72) Erfinder: PAVEN, Maxime, 40764 Mainz (DE); SCHIESSER, Yuliya, 53844 Troisdorf (DE); WEBER, Rainer, 51519 Odenthal (DE); BRAMER-WEGER, Elmar, 53347 Alfter (DE); YOGENDRA, Sivathmeehan, 40211 Düsseldorf (DE)
(74) Vertreter: Levpat

(56) Entgegenhaltungen:
- WO-A1-2012/130803
- US-A1- 2007 221 879
- Robin K Brückner: "Investigation of polychloride anions stabilized by quaternary ammonium and other n-based cations", , 4. Oktober 2016 (2016-10-04), XP055591154, Gefunden im Internet: URL:https://refubium.fu-berlin.de/bitstrea m/handle/fub188/8057/Dissertation_Brueckne r_2016.pdf?sequence=1&isAllowed=y [gefunden am 2019-05-22]

## Beschreibung

Die Erfindung betrifft die Nutzung von Polychloriden und die gezielte Freisetzung von Chlorgas aus Polychloriden zur Nutzung des Chlorgases in chemischen Reaktionen mit Chlor. Das Verfahren ermöglicht es Chlor unter einfachen Bedingungen vorzuhalten und kontrolliert in Form von Chlorgas freizusetzen, um es für eine chemische Reaktion, beispielsweise zur Synthese chlorsubstituierter organischer Verbindungen oder zur Chlorung von Brauchwasser, zu nutzen.

Chlorgas wird üblicherweise durch die Elektrolyse von Salzsole hergestellt. Wenn größere Mengen Chlorgas benötigt werden (industrieller Maßstab) findet die Chlorgasherstellung und Verwendung des Chlorgases in der Regel in räumlicher Nähe zueinander statt. Mit Chlor beladene Druckgasflaschen werden eingesetzt, wenn nur kleinere Mengen Chlorgas benötigt werden, und/oder der Betrieb eines Elektrolyseurs nicht möglich oder sinnvoll ist.

Typische Beispiele für die Nutzung von Chlor aus Druckgasflaschen sind Chlorierungen im Labormaßstab und die Erzeugung von sauberem Brauch- und Trinkwasser in kommunalen Einrichtungen, Wasserwerken und Badeanstalten. Bei der Wasseraufbereitung (Chlorung) tötet Chlor Bakterien, Viren und andere Keime ab womit Chlor in vielen Ländern eine Schlüsselrolle bei der Bereitstellung von sauberem Trinkwasser spielt.

Die Erfindung geht aus von dem im Stand der Technik üblichen Vorgehen Chlorgas mittels Druckgasflaschen bereitzustellen. Dazu wird Chlorgas aus der Elektrolyse von Salzsole gewonnen, bei hohen Drücken (etwa 7 bar bei Raumtemperatur) verflüssigt und in Druckgasflaschen gespeichert und transportiert. Um dem hohen Druck standzuhalten sind die Druckgasflaschen entsprechend dickwandig und damit schwer, was ihre Handhabung und den Transport aufwendig macht. Außerdem muss der Transport der Flasche und die Entnahme des Chlorgases unter besonderen Sicherheitsvorkehrungen erfolgen. Im chemischen Labor werden Druckgasflaschen in der Regel außerhalb des Abzuges aufgebaut und befestigt, was ein weiteres Sicherheitsrisiko darstellt. Kritisch ist außerdem, dass die Entnahme des Chlorgases über einen Flaschendruckminderer erfolgen muss, der mit der Gasflasche und den Anschlüssen der Apparatur dicht zu verschließen ist, um ein unkontrolliertes Austreten von Chlorgas zu vermeiden.

Die zu lösenden Herausforderungen bestehen darin obige Nachteile zu überwinden und die Sicherheit und Nutzerfreundlichkeit bei der Verwendung von Chlor für chemische Reaktionen zu verbessern. Dafür wird ein Verfahren zur gezielten und insbesondere kontrollierten Freisetzung von Chlorgas mittels eines Chlorspeichermediums bereitgestellt - vorstehend und nachstehend auch gegebenenfalls abgekürzt Chlorspeicher genannt - das Chlorgas bei niedrigerem Druck, bevorzugt Atmosphärendruck, vorhalten und unter milden Bedingungen und bei Bedarf wieder freisetzen kann.

Eine besondere zu lösende Aufgabe besteht darin einen Chlorspeicher, der Chlorgas für Reaktionen mit Chlor freisetzen kann, bereitzustellen, der, auf Grund seiner Eigenschaft Chlorgas bei niedrigen Druck speichern zu können, in gängigen und mit Chlor kompatiblen Chemikalienbehältern und Gebinden gelagert werden kann, um den Einsatz von Druckgasflaschen und der damit einhergehenden Nachteile und besonderen Sicherheitsvorkehrungen zu vermeiden.

Eine weitere besondere zu lösende Aufgabe besteht darin den Zeitpunkt und die Menge des freigesetzten Chlorgas aus einem solchen Chlorspeicher zu steuern.

Verschiedene Chlorspeicher auf Basis der Chloradsorption an porösen Festkörpern sind im Stand der Technik grundsätzlich bekannt und beschrieben. Eine technische Realisierung solcher Chlorspeicher ist allerdings in der Regel nicht wirtschaftlich. Die Chlorbeladung (g Chlor pro g Speichermaterial) solcher Speichermaterialien ist sehr gering, da es nur zu einer physikalischen Wechselwirkung zwischen dem porösem Feststoff und Chlor kommt. So beschreibt die Anmeldung US5376164A1 die Adsorption von Chlor an verschiedenen Zeolithen und Silikagel, wobei unter den beschriebenen Messbedingungen (Raumtemperatur, 0,87 bar) eine Beladung von < 0,2 g Chlor pro g Speichermaterial beobachtet wurde. Die Entladung solcher Chlorspeicher erfolgt üblicherweise durch eine Temperaturerhöhung oder eine Druckminderung.

Es gibt aber auch Salze, die eine hohe Affinität für Chlorgas aufweisen. So speichern ionische Verbindungen, die aus organischen Kationen und Chlorid bestehen, Chlorgas in Form sogenannter Polychloride (Clₓ⁻ mit x >1) (F. D. Chattaway, G. Hoyle, J. Chem. Soc., Trans. 1923, 123, 654.; R. Brückner, H. Haller, S. Steinhauer, C. Müller, S. Riedel, Angew. Chem. Int. Ed 2015, 54, 51, 15579-15583).

Im Stand der Technik findet man grundsätzliche Überlegungen solche ionischen Verbindungen als Speichermedium für die Bereitstellung von Chlorspeichern zu nutzen, um so die Sicherheit beim Transport und der Lagerung von Chlor weiter zu erhöhen. So beschreibt etwa die WO2007109611A1 ein Verfahren zur Speicherung und dem Transport von Chlor bei Umgebungsdruck.

Außerdem wurde gezeigt, dass Polychloride grundsätzlich für Chlorierungsreaktionen verwendet werden können: T. Schlama et al. nutzten Polychloride auf Basis von Tetraethylammoniumchlorid für die organische Synthese (T. Schlama, K. Gabriel, V. Gouverneur, C. Mioskowski, Angew. Chem. Int. Ed. 1997, 36, 2342). Die Chlorierung verschiedener Verbindungen erfolgte durch die Zugabe einer Portion festen Tetraethylammoniumtrichlorids zu den gelösten Reaktanden.

Die umgekehrte Herangehensweise wählten Xiaohua Li et. al, sie legten Tetrabutylphosphoniumtrichlorid vor und gaben verschiedene Edelmetalle portionsweise zum Chlorspeicher hinzu, um sie oxidativ aufzulösen (X. Li, A. Van den Bossche, T. Vander Hoogerstraete, K. Binnemans, Chemical Communications 2018, 54, (5), 475-478).

Die obigen Verfahrensweisen sind nachteilig, da die Umsetzung der Reaktanden mit dem im Chlorspeicher gebundenem Chlor in einem Reaktionsraum erfolgt und das entstandene Produkt von dem entladenen Chlorspeicher abgetrennt werden muss. Ausgehend vom Stand der Technik wäre dieses Problem durch einen getrennten Aufbau lösbar, in welchem in einem ersten Reaktionsraum Chlorgas aus dem Chlorspeicher freigesetzt und in einen zweiten Reaktionsraum übergeführt wird, um dort mit einer chemischen Verbindung zu reagieren. Aus dem Stand der Technik bekannte Methoden zur Freisetzung von Chlorgas aus einem Chlorspeicher basieren auf einer Temperaturerhöhung des Chlorspeichers und/oder die Veränderung des Partialdrucks über dem Chlorspeicher. Nachteilig ist dabei, dass eine Temperaturerhöhung und/oder Druckänderung und die damit einhergehende Chlorfreisetzung zeitlich verzögert zueinander stattfinden können, wodurch sich eine gezielte Freisetzung einer definierten Chlormenge erschwert realisieren lässt. Folglich ist es unter den geschilderten Bedingungen schwierig kontrollierte Mengen Chlor für eine Chlorierung freizusetzen und den Vorgang der Freisetzung bei Bedarf zügig unterbinden zu können, um eine chemische Reaktion zu stoppen.

Die zu lösende Aufgabe besteht somit darin, ein vereinfachtes Verfahren für die Entnahme von Chlorgas aus Speichermedien auf Basis von Polychloriden und die Umsetzung des Chlorgases in chemischen Reaktionen mit Chlor als Reaktand bereitzustellen. Dabei soll das Chlorgas gespeichert in Form eines Polychlorides bei niedrigerem Druck, bevorzugt Atmosphärendruck, vorgehalten werden und die Freisetzung des Chlorgases gezielt und kontrollierbar erfolgen können. Bevorzugt soll das Polychlorid räumlich von den Reaktanden getrennt sein, um eine Vermischung von Produkt/Reaktand und Speichermedium zu verhindern. Überraschenderweise wurde gefunden, dass Chlorgas aus einem Speichermedium auf Basis von organischen kationischen Verbindungen enthaltend Polychloridanionen durch die Zugabe eines Freisetzungsmittels in Form von protischen Flüssigkeiten gezielt freigesetzt wird und verwendet werden kann.

Unter "protischer Flüssigkeit" versteht der Fachmann solche Flüssigkeiten, die Verbindungen enthalten, welche unter Normalbedingungen (bei 25°C und 1013 mbar) Protonen abspalten können. Es ist bevorzugt, wenn das Freisetzungsmittel in Form einer protischen Flüssigkeit vorliegt, die einen pH-Wert bei 25°C von pH 1 bis pH 14, bevorzugt von pH 1 bis pH 7,5, aufweist.

Gegenstand der Erfindung ist folglich ein Verfahren zur Umsetzung von Chlor in chemischen Reaktionen mit Chlor enthaltendem Gas mit mindestens einem Reaktionspartner, dadurch gekennzeichnet, dass Chlorgas aus einem Speichermedium auf Basis von ionischen organischen Verbindungen enthaltend Polychloride durch die Zugabe eines Freisetzungsmittels in Form von protischer Flüssigkeit, insbesondere wässrigen Lösungen, bevorzugt von Wasser, wässrigen anorganischen oder wässrigen organischen Säuren, wässrigen Salzlösungen oder beliebigen Gemischen dieser Flüssigkeiten, freigesetzt wird und das freigesetzte Chlorgas mit mindestens einem Reaktionspartner zur chemischen Reaktion mit Chlor gebracht wird.

Unter einer "chemischen Reaktion mit Chlor" werden hier allgemein klassische chemische Reaktionen von Chlor (Cl₂) mit, vorzugsweise organischen, Reaktionspartnern als auch die Chlorung und die daraus resultierende Entkeimung und/oder mikrobielle Reinigung von mikrobiell verunreinigtem Wasser jeder Art verstanden.

Die Freisetzung des Chlorgases aus einem Speichermedium auf Basis von ionischen organischen Verbindungen enthaltend Polychloride durch die Zugabe eines Freisetzungsmittels in Form von protischer Flüssigkeit erfolgt insbesondere in einem Freisetzungsraum. Das aus dem Chlorspeicher freigesetzte Chlorgas wird dann in einen Reaktionsraum übergeführt.

Ein "Reaktionsraum" ist ein Volumen, in dem die an der chemischen Reaktion beteiligten Reaktionspartner zusammengebracht werden und in dem die chemische Reaktion stattfindet. Dies kann für eine chemische Reaktion mit Chlor beispielsweise das Volumen eines Gefäßes sein, in dem sich freigesetztes Chlor und dessen Reaktionspartner gemeinsam befinden.

Eine "Reaktionszone" ist der Teil des Reaktionsraumes, in dem die chemische Reaktion abläuft.

Ein "Freisetzungsraum" ist der Raum der Chlorgasfreisetzung.

Eine "Freisetzungszone" ist der Teil des Freisetzungsraumes, in dem die chemische Reaktion der Chlorgasbildung und -freisetzung abläuft.

Gegenstand der Erfindung ist auch ein Verfahren zur gezielten Freisetzung von Chlorgas aus einem Chlorspeichermedium, dadurch gekennzeichnet, dass das Chlorgas aus einem Speichermedium auf Basis von ionischen organischen Verbindungen enthaltend Polychloride durch die Zugabe eines Freisetzungsmittels in Form von protischer Flüssigkeit, insbesondere wässrigen Lösungen, bevorzugt von Wasser oder wässrigen anorganischen Säuren oder wässrigen organischen Säuren, wässrigen Salzlösungen oder beliebigen Gemischen dieser Flüssigkeiten, freigesetzt wird und das freigesetzte Chlorgas, gegebenenfalls mit Hilfe eines Inertgases, abgeführt wird.

Das weitere erfindungsgemäße Verfahren zur gezielten Freisetzung von Chlorgas aus einem Speichermedium ist ein Teilprozess des erfindungsgemäßen Verfahrens zur Umsetzung von Chlor in chemischen Reaktionen mit Chlor enthaltendem Gas. Alle nachfolgend beschriebenen erfindungsgemäßen Ausführungsformen im Zusammenhang mit der Chlorspeicherung sowie der Chlorfreisetzung aus dem Speichermedium gelten daher für das erfindungsgemäße Verfahren zur Umsetzung und für das erfindungsgemäße Verfahren zur gezielten Freisetzung von Chlorgas gleichermaßen. Das gilt insbesondere für alle Ausführungsformen des Speichermediums, alle Ausführungsformen des Freisetzungsmittels, alle Ausführungsformen der Freisetzungsmittel Zugabe.

Das neue Verfahren umfasst den Einsatz eines Speichermediums enthaltend Polychlorid, das auf einer ionischen organischen Verbindung basiert. Das Kation der ionischen organischen Verbindung ist insbesondere ausgewählt aus der Gruppe einer oder mehrerer jeweils unterschiedlich alkyl- und/oder aryl-substituierter Ammonium-, Phosphonium-, Imidazolium-, Pyridinium- und/oder Guanidiniumkationen. Besonders bevorzugte Kationen sind jeweils unterschiedlich alkyl- und/oder aryl-substituierte Ammonium- oder Phosphonium-Kationen.

Alkylsubstitution im Sinne der Erfindung ist insbesondere die Substitution mit C₁- bis C₆-Alkyl-bevorzugt C₁ bis C₃-Substituenden (Methyl-, Ethyl, n-Propyl- und Isopropyl-Substitution), Arylsubstitution ist insbesondere die Substitution mit C₅- bis C₆- Aryl-Substituenten. Die Aryl-Substituenten können gegebenenfalls verschiedene Heteroatome, wie zum Beispiel Sauerstoff, Schwefel oder Stickstoff enthalten.

In einer weiteren bevorzugten Ausführung des neuen Verfahrens umfasst das unbeladene Speichermedium mindestens eine ionische organische Verbindung der allgemeinen Formel (I) und/oder (II),

(I) N-R1ₘR2ₙR3ₒ⁺ Cl⁻

(II) P-R4ₚR5_{q}⁺ Cl⁻ ,

bevorzugt eine ionische Verbindung der allgemeinen Formel (I),
in welchen Formeln (I) und (II) die Reste R1, R2, R3, R4 und R5 unabhängig voneinander gleich oder verschieden einen Alkylrest ausgewählt aus der Gruppe: Methyl, Ethyl, n-Propyl, iso-Propyl, n-Butyl, iso-Butyl und 2-Methylpropyl, bevorzugt Methyl, Ethyl, iso-Propyl oder n-Propyl bedeuten, und jedoch einschränkend mindestens ein Rest R1, R2 oder R3 von den jeweils anderen Resten R1, R2 und R3 verschieden ist und die Reste R4 und R5 voneinander verschieden sind,
wobei die Zeichen m, n, o, p und q unabhängig voneinander für eine ganze Zahl aus der Reihe von 0 bis 3 stehen, wobei die Summe von m+n+o und die Summe von p+q die Zahl 4 ergeben muss.

Besonders bevorzugt stehen in der Verbindung der allgemeinen Formel (I) die Zeichen m und n für die 1, 2, 3 und o für die 0.

Besonders bevorzugt wird ein Speichermedium eingesetzt, bei dem die ionische Verbindung (I) oder (II) ausgewählt ist aus wenigstens einer Verbindung der Reihe: NEtMe₃Cl, NEt₂Me₂Cl, NEt₃MeCl, NMePr₃Cl, PEt₃MeCl.

Es ist bevorzugt, wenn das Speichermedium im unbeladenen Zustand, insbesondere ein solches Speichermedium mit mindestens einer ionischen Verbindung der allgemeinen Formel (I) und/oder (II), bezogen auf die Gesamtstoffmenge an im Speichermedium enthaltenen Chlorid- und Polychloridionen einen Gehalt an Polychloridionen von weniger als 10 Mol%, besonders bevorzugt von weniger als 5 Mol%, ganz besonders bevorzugt von weniger als 1 Mol%, aufweist.

In einer bevorzugten Variante der Erfindung ist die ionische Verbindung (I) oder (II) im Speichermedium ausgewählt aus wenigstens einer Verbindung der Reihe: NEtMe₃Clᵣ, NEt₂Me₂Clᵣ, NEt₃MeClᵣ, NMePr₃Clᵣ, PEt₃MeClₛ, wobei r und s unabhängig voneinander für eine ungerade ganze Zahl von 1 bis 7, bevorzugt r, s unabhängig voneinander für 1 oder 3 stehen, (die Kürzel Me, Et, Pr, Bu stehen für Methyl, Ethyl, n-Propyl und n-Butyl).

Ganz besonders bevorzugt ist die Verbindung (I) ausgewählt aus wenigstens einer Verbindung der Reihe: NEtMe₃Cl, NEt₂Me₂Cl, NEt₃MeCl.

Grundsätzlich geeignet als ionische organische Verbindungen für das neue Chlorfreisetzungsverfahren sind auch noch die nachfolgend genannten, z.T. literaturbekannten einfachen Kationen, welche Polychloride bilden könnten, der Liste:
1,2,3-Trimethylimidazolium, 1,3,4,5-Tetramethylimidazolium, 1,3,4-Dimethylimidazolium, 1,3,4-Trimethylimidazolium, 1,3-Dibutyl-2-methylimidazolium, 1,3-Dibutylimidazolium, 1,2-Dimethylimidazolium, 1,3-Dimethylimidazolium, 1-Benzyl-3-methylimidazolium, 1-Butyl-2,3-dimethylimidazolium, 1-Butyl-2-ethyl-5-methylimidazolium, 1-Butyl-2-ethylimidazolium, 1-Butyl-2-5 methylimidazolium, 1-Butyl-3,4,5-trimethylimidazolium, 1-Butyl-3,4-dimethylimidazolium, 1-Butyl-3-ethylimidazolium, 1-Butyl-3-methylimidazolium, 1-Butyl-4-methylimidazolium, 1-Butylimidazolium, 1-Decyl-3-methylimidazolium, 1-Dodecyl-3-methylimidazolium, 1-Ethyl-2,3-dimethylimidazolium, 1-Ethyl-3-methylimidazolium, 1-Hexadecyl-2,3-dimethylimidazolium, 1-Hexadecyl-3-methylimidazolium, 1-Hexyl-2,3-dimethylimidazolium, 1-Hexyl-3-methylimidazolium, 1-Methyl-2-ethylimidazolium, 1-Methyl-3-octylimidazolium, 1-Methylimidazolium, 1-Pentyl-3-methylimidazolium, 1-Phenylpropyl-3-methylimidazolium, 1-Propyl-2,3-dimethylimidazolium, 1-Tetradecyl-3-methylimidazolium, 2,3-Dimethylimidazolium, 2-Ethyl-3,4-dimethylimidazolium, 3,4-Dimethylimidazolium,
1,2-Dimethylpyridinium, 1-Butyl-2-ethyl-6-methylpyridinium, 1-Butyl-2-ethylpyridinium, 1-Butyl-2-methylpyridinium, 1-Butyl-3,4-dimethylpyridinium, 1-Butyl-3,5-dimethylpyridinium, 1-Butyl-3-ethylpyridinium, 1-Butyl-3-methylpyridinium, 1-Butyl-4-methylpyridinium, 1-Butylpyridinium,1-Ethylpyridinium, 1-Hexyl-3-methylpyridinium, 1-Hexyl-4-methylpyridinium, 1-Hexylpyridinium, 1-Methylpyridinium, 1-Octylpyridinium, 2-Ethyl-1,6-dimethylpyridinium, 2-Ethyl-1-methylpyridinium, 4-Methyl-l-octylpyridinium, 1,1-Dimethylpyrrolidinium, 1-Butyl-l-ethylpyrrolidinium, 1-Butyl-1-methylpyrrolidinium, 1-Ethyl-1-methylpyrrolidinium, 1-Ethyl-3-methylpyrrolidinium, 1-Hexyl-1-methylpyrrolidinium, 1-Octyl-lmethylpyrrolidinium,
Guanidinium, Hexamethylguanidinium, N,N,N' ,N'-Tetramethyl-N"-ethylguanidinium, N-Pentamethyl-N-isopropylguanidinium, N-Pentamethyl-N-propylguanidinium,
Benzyltriphenylphosphonium, Tetrabutylphosphonium, Trihexyl(tetrndecyl)phosphonium, Triisobutyl(methyl)phosphonium,
Butyltrimethylammonium, Methyltrioctylammonium, Octy1trimethylammonium, Tetrabutylammonium, Tetrapropylammonium, Tetraethylammonium, Tetramethylammonium und/oder Tributylmethylammonium.
Bevorzugt wird folglich ein beladenes Speichermedium im neuen Verfahren eingesetzt, bei dem die enthaltenden ionischen organischen Verbindungen, bevorzugt die enthaltenen ionischen organischen Verbindungen der Formel (I) und/oder der Formel (II), mit Chlor in Kontakt gebracht sind. Dabei wird Chlor bei milden Bedingungen aufgenommen, bevorzugt bei einer Temperatur im Bereich von ≥ 0 °C bis ≤ 40 °C, besonders bevorzugt bei einer Temperatur ≥ 15 °C bis ≤ 30 °C, und/oder bei einem Druck im Bereich von ≥ 900 hPa bis ≤ 7000 hPa, bevorzugt ≥ 900 hPa bis ≤ 1100 hPa.
Insbesondere erfolgt die Chloraufnahme durch das zuvor genannte unbeladene Speichermedium unter Umgebungsdruck (umgebender atmosphärischer Luftdruck, z.B. von 1 bar (1000 hPa) auf NN) und Umgebungstemperatur, insbesondere bei 20-25 °C.
Bevorzugt reagieren die im Speichermedium enthaltenden ionischen organischen Verbindungen der Formel (I) bzw. der Formel (II) zu einem oder mehreren Polychloriden der Formel (III) bzw. der Formel (IV),

   (III) N-R1ₘR2ₙR3ₒ⁺ Cl₍ᵣ₊₂₎⁻

   (IV) P-R4ₚR5_{q}⁺ Cl₍ₛ₊₂₎⁻
bevorzugt zu ionischen organischen Verbindungen der allgemeinen Formel (III),
wobei in den Formeln (III) und (IV) die Reste R1, R2, R3, R4 und R5 unabhängig voneinander gleich oder verschieden einen Alkylrest ausgewählt aus der Gruppe: Methyl, Ethyl, n-Propyl, isoPropyl, n-Butyl, iso-Butyl und 2-Methylpropyl, bevorzugt Methyl, Ethyl oder n-Propyl bedeuten, und wobei die Reste R1, R2 und R3 bzw. die Reste R4 und R5 jeweils voneinander verschieden sind,
wobei die Zeichen m, n, o, p und q unabhängig voneinander für eine ganze Zahl aus der Reihe von 0 bis 3 stehen, wobei die Summe von m+n+o und die Summe von p+q die Zahl 4 ergeben muss,
die Zeichen r und s unabhängig voneinander für eine ungerade ganze Zahl von 1 bis 7, bevorzugt r, s unabhängig voneinander für 1 oder 3 stehen. Anschließend erfolgt die Freisetzung mit dem Freisetzungsmittel.

Die im neuen Verfahren einzusetzenden Chlorspeicher können vergleichsweise große Mengen Chlor aufnehmen und enthalten im beladenen Zustand vor der Chlorfreisetzung (insbesondere gemessen bei 25 °C und 1000 hPa) insbesondere mindestens 0,4 g Cl₂ / g ionische Verbindung, bevorzugt mindestens 0,6 g Cl₂ / g ionische Verbindung, besonders bevorzugt 0,75 g Cl₂ / g ionische Verbindung. Bei diesen hohen Chlorbeladungen liegen unterschiedliche Anteile von verschiedenen Polychloridanionen im Gleichgewicht nebeneinander vor, wie etwa Cl₃⁻, Cl₅⁻, Cl₇⁻und höhere Polychloride.

Die Gemische verschiedener Polychloridanionen bilden sich in Abhängigkeit von der eingebrachten Chlormenge und dem jeweiligen Reaktionsgleichgewicht.

In dem neuen Verfahren wird besonders bevorzugt ein Speichermedium eingesetzt, das im mit Chlor beladenem Zustand, insbesondere bevorzugt bei einer Temperatur von 25 °C und einem Druck von 1000±100 hPa, flüssig ist, um eine leichte Dosierung und Handhabung des Speichermaterials zu ermöglichen.

Bei der durch das Freisetzungsmittel induzierten Chlorgasfreisetzung reduziert sich im Speichermedium der Gehalt an Polychloriden und der Gehalt an Chloridionen erhöht sich. Vorzugsweise weist das für die Freisetzung von Chlorgas im erfindungsgemäßen Verfahren eingesetzte Polychlorid-haltige beladene Speichermedium bezogen auf die Gesamtstoffmenge an enthaltenen Chlorid- und Polychloridionen einen Gehalt an Polychloridionen von mindestens 10 Mol%, besonders bevorzugt von mindestens 20 Mol%, ganz besonders bevorzugt von mindestens 30 Mol%, auf.

Der Einsatz obiger Verbindungen (III) und (IV) im neuen Verfahren ist außerdem deswegen bevorzugt, da diese Verbindungen gute Lagereigenschaften aufweisen. Die Kationen der Verbindungen (I) und (II) zeigen grundsätzlich eine geringere Neigung zu Seitenkettenchlorierung als Verbindungen mit einer Kettenlänge von 4 und mehr Kohlenstoff Atomen. Verbindungen aus der Gruppe der Imidazolium-, Pyridinium- und Pyrrolidinium- neigen außerdem zur Chlorierung des aromatischen Ringes, was bei den Verbindungen (III) und (IV) nicht möglich ist und sie sind deswegen bevorzugt einzusetzen.

Bevorzugt ist ein neues Verfahren zur Umsetzung, bei dem die chemische Reaktion mit Chlor ausgewählt ist aus der Reihe: Organische Chlorierungsreaktionen, Additionsreaktionen, Substitutionsreaktionen.

Bevorzugt wird das neue Verfahren zur Umsetzung auch angewendet bei der Chlorung zur Reinigung von mikrobiell verunreinigtem Brauch-, Trink- oder Badewasser, insbesondere in dem die mikrobielle Verunreinigung des jeweiligen Wassers durch eine oder mehrere Keime aus der Reihe: Bakterien, Viren, Protozoen, Hefen, Pilze oder deren mögliche Sporen verursacht ist.

In einer bevorzugten Ausführung des neuen Verfahrens zur Umsetzung von Chlor in chemischen Reaktionen mit Chlor enthaltendem Gas erfolgt die Freisetzung des Chlorgases aus dem Chlorspeichermedium im gleichen Reaktionsraum, in dem die chemische Reaktion mit Chlor stattfindet, bevorzugt mit der Maßgabe, dass die Freisetzungszone der Chlorgasfreisetzung und die Reaktionszone der chemischen Reaktion mit Chlor in unterschiedlichen Zonen des Reaktionsraumes liegen. In diesem Fall werden besonders bevorzugt solche ionische organische Verbindungen eingesetzt, deren organische Kationen chemisch inert gegenüber den Reaktionspartnern der chemischen Reaktion sind.

In einer bevorzugten Ausführung des neuen Verfahrens zur Umsetzung erfolgt die Freisetzung des Chlors aus dem Speichermedium in einem vom Reaktionsraum der chemischen Reaktion mit Chlor getrennten Freisetzungsraum, bevorzugt in einem Freisetzungsraum, der in absperrbarer Fluidverbindung zum Reaktionsraum der chemischen Reaktion mit Chlor steht.

Diese Variante ermöglicht eine kontrollierbare Freisetzung des Chlors, insbesondere in Fällen in denen ein Reaktionspartner oder Lösungsmittel, welche bei der chemischen Reaktion beteiligt sind, mit dem Speichermedium und/oder dem Freisetzungsmittel reagiert.

In einer weiteren Ausführung dieser Variante kann zwischen dem Reaktionsraum der Chlorfreisetzung und dem Reaktionsraum der chemischen Reaktion mit Chlor eine Vorrichtung zur Entfernung von Resten des Freisetzungsmittels, insbesondere zur Trocknung des Chlors von Wasser, wie ein Trockenrohr, angebracht werden. Bekannt ist zum Beispiel die Trocknung mittels konzentrierter Schwefelsäure. Dies ist bei solchen chemischen Reaktionen mit Chlor von Vorteil, die durch die Anwesenheit des Freisetzungsmittels (z. B. Wasser) beeinträchtigt oder behindert werden.

Die Freisetzung des Chlors aus dem Polychlorid-enthaltenden Speichermedium erfolgt bevorzugt durch die kontrollierte Zugabe eines Freisetzungsmittels in Form von protischer Flüssigkeit, besonders bevorzugt von wässrigen Lösungen, bevorzugter von Wasser, wässriger Säure, Salzlösung oder Gemischen von wässrigen Säuren und Salzlösungen.

Unter "kontrollierter Zugabe" versteht der Fachmann im Allgemeinen die Dosierung einer definierten Menge einer zu dosierenden Substanz (hier: Freisetzungsmittel) über einen definierten Zeitraum hinweg zu einem Medium (hier: Speichermedium). Die Dosierung der Menge kann kontinuierlich oder diskontinuierlich (z.B. in diskreten Portionen) erfolgen. Die kontrollierte Zugabe lässt sich bevorzugt elektronisch regeln.

Besonders bevorzugt erfolgen Freisetzung des Chlors und die chemische Reaktion mit Chlor in unterschiedlichen Reaktionsräumen, die durch eine Gaszuleitung miteinander verbunden sind. Der Chlorspeicher befindet sich in einem ersten Reaktionsraum, in welches eines der obigen Freisetzungsmittel, bevorzugt kontrolliert, eingebracht wird. Das entstehende Chlor wird in einen zweiten Reaktionsraum überführt, in dem die chemische Reaktion mit Chlor vonstattengeht.

Generell wird in dem erfindungsgemäßen Verfahren durch die Zugabe des Freisetzungsmittels die Freisetzung von Chlor aus dem besagten Speichermedium induziert. Die freigesetzte Chlormenge korreliert hierbei mit der zugegebenen Menge an Freisetzungsmittel, was es erlaubt die aus dem Speicher freigesetzte und der chemischen Reaktion zugeführten Chlormenge zu kontrollieren. Wird die Zugabe des Freisetzungsmittels beendet, so endet auch die Chlor-Freigabe aus dem Speichermedium. Bedarfsweise ist es auch möglich das gebildete Chlorgas in einem Pufferspeicher zwischenzuspeichern und/oder die Zuführung des Chlorgases zur chemischen Reaktion zusätzlich mittels eines Regelventils zu steuern. Der Vorteil der Dosierungsregelung für das Freisetzungsmittel besteht allerdings darin, dass man ein zusätzliches Regelventil für das Chlorgas nicht unbedingt benötigt und damit die Handhabung vereinfacht.

Der Chlorspeicher gilt als entladen, wenn die Zugabe des Freisetzungsmittels zu keiner Chlorfreisetzung mehr führt. In diesem Fall ist das Polychlorid aufgebraucht und im ersten Reaktionsraum befinden sich das Freisetzungsmittel und die ionische(n) Verbindung(en), die die Grundlage des Chlorspeichers bildete(n).

Entladene Chlorspeichermedien können rezykliert werden, indem das Speichermedium vom Freisetzungsmittel getrennt und das Speichermedium mit neuem Chlor beladen wird. Dies kann gesondert durchgeführt werden und der neue beladene Chlorspeicher für das neue Verfahren wiederverwendet werden.

Besonders bevorzugt ist also ein neues Verfahren, das dadurch gekennzeichnet ist, dass als Speichermedium ein Speichermedium verwendet wird, das reversibel Chlor freisetzt und wieder aufnimmt und am Ende der Freisetzung vom Freisetzungsmittel getrennt wird und in einem anschließenden Schritt wieder mit Chlor aus einer externen Chlorquelle beladen wird.

Ein besonders bevorzugtes neues Verfahren ist dadurch gekennzeichnet, dass als Freisetzungsmittel Wasser verwendet wird und pro Äquivalent Chlorspeichermedium im beladenen Zustand, insbesondere als Trichlorid, maximal 6 Äquivalente Wasser bevorzugt, maximal 5 Äquivalente Wasser, besonders bevorzugt, 4 bis 5 Äquivalente Wasser eingesetzt werden. Dieses besondere Vorgehen ermöglicht eine optimale Ausnutzung des im Chlorspeicher gebundenen Chlors.

Die Entladung des Speichermediums erfolgt in einer besonders bevorzugten Ausführung des neuen Verfahrens zusätzlich zur Freisetzung mit dem Freisetzungsmittel bei einer erhöhten Temperatur im Bereich von ≥ 25 °C bis ≤ 100 °C, bevorzugt ≥ 30 °C bis ≤ 80 °C, insbesondere bei 1000±100 hPa. Das beladene Speichermedium wird typischerweise bei Umgebungstemperatur (z.B. 20 °C) vorgehalten.

In einer alternativen Variante zu der vorgenannten Freisetzung in einer von der chemischen Reaktion mit Chlor getrennten Reaktionszone findet die Freisetzung des Chlors aus dem Speichermedium im Reaktionsraum der chemischen Reaktion statt, wenn die Anwesenheit des entladenen Speichermediums die chemische Reaktion nicht beeinträchtigt oder zu unerwünschten Nebenreaktionen führt.

Bei dieser Variante ist der Einsatz obiger Polychloride gemäß der Formeln (III) oder (IV) besonders bevorzugt, da diese - insbesondere im Arbeitsbereich - flüssigen Polychloride in den Reaktionsraum dosiert eingespeist werden können. Das ermöglicht den Fortschritt der chemischen Reaktion zu steuern und die Reaktion durch die Unterbrechung der Zuspeisung jederzeit unterbrechen zu können.

Das neue Verfahren kann für eine Vielzahl von Anwendungen genutzt werden, bei denen Chlorgas benötigt wird und bei denen die Handhabung von Druckgasflaschen nachteilig oder umständlich ist.

Spezielle Aufgabe der Erfindung ist, wie oben beschrieben die vereinfachte Bereitstellung von Chlor für die Trinkwasseraufbereitung und für die organische Synthese.

In einer besonders bevorzugten Variante wird das aus dem Chlorspeicher freigesetzte Chlor zur Chlorung und damit Reinigung von mikrobiell verunreinigtem Brauch-, Trink- oder Badewasser genutzt, um vorliegende mikrobielle Verunreinigung des Wassers, welche durch eine oder mehrere aus der Reihe: Bakterien, Viren, Sporen oder Pilze verursacht ist, unschädlich zu machen.

In einer besonders bevorzugten Ausführung befindet sich der Chlorspeicher in einem eigenem Behälter und das Chlor wird durch Zugabe von Wasser aus dem Chlorspeicher freigesetzt. Das freigesetzte Chlorgas wird anschließend entsprechend dem Stand der Technik in das zu chlorierende Wassernetz eingespeist.

Eine weitere spezielle Aufgabe der Erfindung ist die Bereitstellung von Chlor für die Chlorierungsreaktionen in der organischen chemischen Synthese, z.B. Additionsreaktionen und Substitutionsreaktionen, insbesondere in kleinerem Maßstab (Labormaßstab). Ein Vorteil des neuen Verfahrens ist hier, dass in dem Verfahren die flüssigen Chlorspeichermedien einfach gehandhabt, ansatzgrößengerecht dosiert, und die Handhabung von Gasflaschen für die eigentliche chemische Reaktion ersetzt werden kann.

In einer bevorzugten Ausführung befindet sich das Chlorspeichermedium in einem eigenen vom chemischen Reaktionsraum getrennten Behälter. Freigesetztes Chlorgas wird nach Freisetzung wie im Stand der Technik grundsätzlich üblich in den Reaktionsraum überführt, in dem die chemische Reaktion stattfindet. Das kann hilfsweise auch unter Verwendung von Trägergas erfolgen, das insbesondere ein Inertgas ist. Bevorzugt wird das Trägergas ausgewählt aus mindestens einem Inertgas der Gruppe, die gebildet wird aus Stickstoff, Argon, Helium, Neon, Kohlendioxid (besonders bevorzugt aus mindestens einem Inertgas der Gruppe, die gebildet wird aus Stickstoff, Argon, Helium, Neon).

Wie oben beschrieben wird Chlor aus dem Chlorspeichermedium durch kontrollierte Zugabe von Freisetzungsmittel, insbesondere von protischer Flüssigkeit freigesetzt. Die Freisetzungsgeschwindigkeit des Chlors kann durch die Art und Weise der Zugabe des Freisetzungsmittels gesteuert werden, zum Beispiel durch Zutropfen oder kontinuierliches Einspeisen des Freisetzungsmittels in den Chlorspeicher. Die aus dem Chlorspeichermedium freigesetzte Chlormenge korreliert hierbei mit der zugegebenen Menge Freisetzungsmittel und erlaubt so eine genaue Freisetzung und Dosierung des Chlors, welches in den Reaktionsraum der chemischen Reaktion überführt wird.

Das Chlorspeichermedium gilt als entladen, sobald unter weiterer Zugabe von Freisetzungsmittel kein Chlorgas mehr freigesetzt wird. Die ionischen Verbindungen, insbesondere die Ammonium-und/oder Phosphoniumchloride, liegen dann zusammen mit der protischen Flüssigkeit vor. Das Gemisch aus Freisetzungsmittel und entladenem Chlorspeichermedium kann entweder entsorgt oder aufgetrennt werden, um das Speichermedium und das Freisetzungsmittel wiederzuverwenden, wobei die Trennung des Gemisches insbesondere destillativ erfolgt.

### Beispiele

### Beispiel 1 - Herstellung eines Chlorspeichers bestehend aus einer Mischung verschiedener Polvchloride (Cl₃⁻, Cl₅⁻, Cl₇⁻ und Cl₉⁻)

Im ersten Schritt wurde festes Triethylmethylammoniumchlorid [NEt₃Me]Cl (100 g) in einem Reaktor vorgelegt und auf 20 °C temperiert. Die Erstbeladung der ionischen Verbindung erfolgte durch Einleiten von Chlor bei ca. 1000 hPa, wobei 87 g Chlor gebunden wurden und sich das Speichermedium ([NEt₃Me]Cl) verflüssigte. Auf diese Weise nahm [NEt₃Me]Cl 0,87 g Chlor / g ionische Verbindung auf und die dynamische Viskosität des flüssigen, beladenen Chlorspeichers betrug 19 mPa·s. Im Ramanspektrum konnten tri- bis nonachloride nachgewiesen werden.

### Beispiel 2 - Herstellung eines Chlorspeichers bestehend aus [NEt₃Me]Cl₃

Im ersten Schritt wurde festes Triethylmethylammoniumchlorid [NEt₃Me]Cl (22.52 g, 1.00 eq.) in einen Schlenkkolben bei 20 °C vorgelegt und die überstehende Gasphase im Vakuum entfernt. Die Beladung der ionischen Verbindung erfolgte durch Einleiten von Chlor (10.39 g, 1.02 eq.) in den evakuierten Kolben, wobei sich eine gelbe Flüssigkeit ausbildete. Das Raman Spektrum der gelben Flüssigkeit bestätigt die quantitative Bildung des [NEt₃Me]Cl₃,

### Beispiel 3 - Chlorfreisetzung aus einem Chlorspeicher für anschließende Chlorierungsreaktionen

Ein Chlorspeicher wurde entsprechend Beispiel 1 hergestellt und in einen Schlenkkolben überführt. Auf dem Schlenkkolben wurde ein Tropftrichter oder eine andere Vorrichtung zur kontinuierlichen Einspeisung des Freisetzungsmittels angebracht, wie etwa eine Spritzenpumpe mit Spritze, an die ein in das Speichermedium eintauchender Schlauch befestigt sein konnte. Über die Vorrichtung wurde eine protische Flüssigkeit, wie z.B. Wasser, zum Chlorspeicher gegeben, wobei es unverzüglich zur Freisetzung von Chlor kam. Die Freisetzungsrate und die Gesamtmenge des freigesetzten Chlors hing von der Geschwindigkeit und der Menge des zugeführten Freisetzungsmittels ab. Wurde die Zufuhr des Freisetzungsmittels ausgesetzt, so unterband dies auch die Freisetzung des Chlors. Chlor kann so in die Gasphase entweichen und über den Seitenarm des Schlenkkolbens in den für die chemische Reaktion vorgesehenen Reaktionsraum gelangen. Die chemische Reaktion kann in der Gasphase stattfinden oder das Chlor wird über eine Gaseinleitung in eine Flüssigkeit eingespeist mit der das Chlor reagiert. So kann das Chlor für eine organisch chemische Reaktion genutzt werden, wie um Additionsreaktionen und Substitutionsreaktionen durchzuzuführen. Das Chlor kann in Brauchwasser eingespeist werden, um das Wasser zu entkeimen.

### Beispiel 4 - Chlorfreisetzung aus dem Chlorspeicher [NEt₃Me]Cl₃ mit verschiedenen Chlorfreisetzungsmitteln für anschließende Chloriernngsreaktionen

Analog zu Beispiel 3 wurden weitere Cl₂-Freisetzungsversuche mit verschiedenen Cl₂-Freisetzungsmitteln untersucht. Hierbei wurde ein Chlorspeicher entsprechend Beispiel 2 hergestellt und in einen Schlenkkolben überführt. Auf den Schlenkkolben wurde ein Tropftrichter oder eine andere Vorrichtung zur kontinuierlichen Einspeisung des Freisetzungsmittels angebracht, wie etwa eine Spritzenpumpe mit Spritze, an die ein in das Speichermedium eintauchender Schlauch befestigt sein kann. Über die Vorrichtung wurden jeweils 10 Äquivalente eines protischen Chlorfreisetzungmittels (siehe Tabelle 1) zum Chlorspeicher gegeben. Abhängig vom verwendeten Chlorfreisetzungsmittel wurden 52-89% des im [NEt₃Me]Cl₃ gespeicherten Chlorgases freigesetzt (siehe Tabelle 1). Die Freisetzungsrate und die Gesamtmenge des freigesetzten Chlorgases hängt von der Geschwindigkeit, Temperatur und Konzentration des zugeführten Freisetzungsmittels ab. Die Nutzung des freigesetzten Chlorgases kann analog zu Beispiel 3 erfolgen.

**Tabelle 1: Zusammenfassung der Chlorfreisetzungsversuche mit verschiedenen Chlorfreisetzungsmitteln**

| **Cl₂**-**Freisetzungsmittel** | **Einwaage des [NEt₃Me]Cl₃ in g** | **Zugesetztes Cl₂**-**Freisetzungsmittel in Äquivalente^{a}** | **Temperatur des Cl₂- Freisetzungsmittel in °C** | **Entladung des Chlorspeichers in %^{b}** | **Cl₂-Freisetzung in g** |
|---|---|---|---|---|---|
| H₂O | 1,38 | 10 | 20 | 70 | 0,306 |
| H₂O | 3,37 | 10 | 40 | 78 | 0,842 |
| Essigsäure (100%ig) | 3,14 | 10 | 20 | 52 | 0,516 |
| NaCl in H₂O (5 Gew%) | 5,36 | 10 | 20 | 82 | 1,4 |
| NaCl in H₂O (gesättigt) | 5,41 | 10 | 20 | 89 | 1,53 |
| HCl (30 Gew%) | 5,8 | 10 | 20 | 78 | 1,44 |

| | | | | | |
|---|---|---|---|---|---|
| a) Äquivalente bezogen auf 1 Äquivalent [NEt₃Me]Cl₃. b) Bezogen auf das im [NEt₃Me]Cl₃ gespeicherte Cl₂. | | | | | |

### Beispiel 5 - Quantitative Chlorfreisetzung aus dem Chlorspeicher [NEt₃Me]Cl₃ mit Wasser für anschließende Chlorierungsreaktionen

Zur Optimierung der Chlorfreisetzung aus dem Chlorspeicher [NEt₃Me]Cl₃ mit Wasser und anschließender Reaktion des Chlors analog zu Beispiel 3 wurden weitere Untersuchungen durchgeführt. Hierbei wurde der Chlorspeicher [NEt₃Me]Cl₃ entsprechend Beispiel 2 hergestellt und in einen Schlenkkolben überführt. Auf dem Schlenkkolben wurde ein Tropftrichter oder eine andere Vorrichtung zur kontinuierlichen Einspeisung des Freisetzungsmittels angebracht, wie etwa eine Spritzenpumpe mit Spritze, an die ein in das Speichermedium eintauchender Schlauch befestigt sein kann. Über die Vorrichtung wurde schrittweise in Intervallen von 0.1 Äquivalenten bis zu 7 Äquivalenten Wasser zum Chlorspeicher gegeben. Hierbei wurde eine stetig zunehmende Chlorfreisetzung beobachtet. Bereits nach der Zugabe von etwa 5-6 Äquivalenten Wasser wurde eine quantitative Chlorfreisetzung (>99%) erzielt. ZusätzlicheZugabe von Wasser führte zu keiner weiteren Chlorfreisetzung. Die Nutzung des freigesetzten Cl₂ Gases kann analog zu Beilspiel 3 erfolgen.

### Beispiel 4 (Chlorierung von Allylbenzol)

Die Chlorierung von Allylbenzol über die Freisetzung von Chlor wird durch Zutropfen von Wasser zu einem Chlorspeicher wie in Beispiel 2 beschrieben und Überleitung des Chlors in ein zweites Reaktionsgefäß, in dem die Chlorierung des Allylbenzols stattfindet, durchgeführt.

## Patentansprüche

1. Verfahren zur Umsetzung von Chlor in chemischen Reaktionen mit Chlor enthaltendem Gas mit mindestens einem Reaktionspartner, **dadurch gekennzeichnet, dass** Chlorgas aus einem Speichermedium auf Basis von ionischen organischen Verbindungen enthaltend Polychloride durch die Zugabe eines Freisetzungsmittels in Form einer protischen Flüssigkeit, insbesondere wässrigen Lösungen, bevorzugt von Wasser oder wässrigen anorganischen Säuren oder wässrigen organischen Säuren, wässrigen Salzlösungen oder beliebigen Gemischen dieser Flüssigkeiten, freigesetzt wird und das freigesetzte Chlorgas mit mindestens einem Reaktionspartner zur chemischen Reaktion mit Chlor gebracht wird.

2. Verfahren nach Anspruch 1, **dadurch gekennzeichnet, dass** die Freisetzung des Chlors aus dem Speichermedium in einem vom Reaktionsraum der chemischen Reaktion mit Chlor getrennten Freisetzungsraum stattfindet, bevorzugt in einem Freisetzungsraum, der in absperrbarer Fluidverbindung zum Reaktionsraum der chemischen Reaktion mit Chlor steht, stattfindet.

3. Verfahren nach Anspruch 2, **dadurch gekennzeichnet, dass** als Speichermedium ein Speichermedium verwendet wird, das reversibel Chlor freisetzt und wieder aufnimmt und am Ende der Freisetzung vom Freisetzungsmittel getrennt wird und in einem anschließenden Schritt wieder mit Chlor aus einer externen Chlorquelle beladen wird.

4. Verfahren nach einem der Ansprüche 1 bis 3, **dadurch gekennzeichnet, dass** die chemische Reaktion mit Chlor ausgewählt ist aus der Reihe: organische Chlorierungsreaktionen, Additionsreaktionen, Substitutionsreaktionen, Chlorung zur Reinigung von mikrobiell verunreinigtem Brauch-, Trink- oder Badewasser.

5. Verfahren nach Anspruch 4, **dadurch gekennzeichnet, dass** die bei der Reinigung von mikrobiell verunreinigtem Brauch-, Trink- oder Badewasser vorliegende mikrobielle Verunreinigung des Wassers durch eine oder mehrere Keime aus der Reihe: Bakterien, Viren, Protozoen, Hefen, Pilze oder deren mögliche Sporen verursacht ist.

6. Verfahren nach wenigstens einem der Ansprüche 1 bis 5, **dadurch gekennzeichnet, dass** die Chlorfreisetzung durch kontrollierte Zugabe des Freisetzungsmittels erfolgt.

7. Verfahren nach wenigstens einem der Ansprüche 1 bis 6, **dadurch gekennzeichnet, dass** das Speichermedium ein Polychlorid umfasst, das auf einer ionischen organischen Verbindung basiert, und das wenigstens aus einer mit Chlor beladenen ionischen organischen Verbindung besteht, wobei das Kation der ionischen organischen Verbindung insbesondere ausgewählt ist aus der Gruppe einer oder mehrerer jeweils unterschiedlich alkyl-, und/oder aryl- substituierter Ammonium-, Phosphonium- Imidazolium-, Pyridinium- und/oder Guanidiniumkationen. bevorzugt jeweils unterschiedlich alkyl- und/oder aryl-substituierte Ammoniumkationen oder Phosphoniumkationen.

8. Verfahren nach einem der Ansprüche 1 bis 7, **dadurch gekennzeichnet, dass** das unbeladene Speichermedium mindestens eine ionische organische Verbindung der allgemeinen Formel (I) bzw. (II) umfasst,
(I) N-R1ₘR2ₙR3ₒ⁺ Cl⁻
(II) P-R4ₚR5_{q}⁺ Cl⁻
bevorzugt ionische Verbindungen der allgemeinen Formel (I),
in denen die Reste R1, R2, R3, R4 und R5 unabhängig voneinander gleich oder verschieden einen Alkylrest ausgewählt aus der Gruppe: Methyl, Ethyl, n-Propyl, iso-Propyl, n-Butyl, iso-Butyl und 2-Methylpropyl, bevorzugt Methyl, Ethyl, oder n-Propyl bedeuten, und wobei jedoch einschränkend mindestens ein Rest R1, R2 oder R3 von den jeweils anderen Resten R1, R2 und R3 verschieden ist und die Reste R4 und R5 voneinander verschieden sind,
wobei die Zeichen m, n, o, p und q unabhängig voneinander für eine ganze Zahl aus der Reihe von 0 bis 3 stehen, wobei die Summe von m+n+o und die Summe von p+q die Zahl 4 ergeben muss,
und das unbeladene Speichermedium vor der Chlorfreisetzung mit Chlor beladen wird.

9. Verfahren nach Anspruch 8, bei dem zunächst das unbeladene Speichermedium, mindestens enthaltend mindestens eine ionische Verbindung der Formel (I) bzw. der Formel (II), insbesondere unter Umgebungsdruck (atmosphärischer Luftdruck z.B. von 1 bar (1000 hPa) auf NN) mit Chlor in Kontakt gebracht wird und die ionische(n) organischen Verbindung(en) zu einem oder mehreren Polychloriden der Formel (III) bzw. der Formel (IV) reagieren,
(III) N-R1ₘR2ₙR3ₒ⁺ Cl₍ᵣ₊₂₎⁻
(IV) P-R4ₚR5_{q}⁺ Cl₍ₛ₊₂₎⁻
bevorzugt ionischen Verbindungen der allgemeinen Formel (I),
in denen die Reste R1, R2, R3, R4 und R5 unabhängig voneinander gleich oder verschieden einen Alkylrest ausgewählt aus der Gruppe: Methyl, Ethyl, n-Propyl, iso-Propyl, n-Butyl, iso-Butyl und 2-Methylpropyl, bevorzugt Methyl, Ethyl, oder n-Propyl bedeuten, und wobei jedoch einschränkend mindestens ein Rest R1, R2 oder R3 von den jeweils anderen Resten R1, R2 und R3 verschieden ist und die Reste R4 und R5 voneinander verschieden sind,
wobei die Zeichen m, n, o, p und q unabhängig voneinander für eine ganze Zahl aus der Reihe von 0 bis 3 stehen, wobei die Summe von m+n+o und die Summe von p+q die Zahl 4 ergeben muss,
wobei r und s unabhängig voneinander für eine ungerade ganze Zahl von 1 bis 7, bevorzugt r, s unabhängig voneinander für 1 oder 3 stehen,
und dann die Freisetzung mit dem Freisetzungsmittel erfolgt.

10. Verfahren gemäß wenigstens einem der Ansprüche 8 bis 9, **dadurch gekennzeichnet, dass** in der Verbindung der allgemeinen Formel (I) die Zeichen m und n für die 1, 2, 3 und o für die 0 stehen.

11. Verfahren gemäß wenigstens einem der Ansprüche 9 oder 10, **dadurch gekennzeichnet, dass** die ionische Verbindung (I) oder (II) ausgewählt ist aus wenigstens einer Verbindung der Reihe: NEtMe₃Cl, NEt₂Me₂Cl, NEt₃MeCl, NBuEt₂MeCl, NMePr₃Cl, NBu₂Me₂Cl, PEt₃MeCl, wobei die Kürzel Me, Et, Pr, Bu für Methyl, Ethyl, n-Propyl und n-Butyl stehen.

12. Verfahren gemäß einem der Ansprüche 9 oder 11, **dadurch gekennzeichnet, dass** die Verbindung (I) insbesondere ausgewählt ist aus wenigstens einer Verbindung der Reihe: NEtMe₃Cl, NEt₂Me₂Cl, NEt₃MeCl.

13. Verfahren gemäß einem der Ansprüche 1 bis 12, **dadurch gekennzeichnet, dass** das Speichermedium im beladenen Zustand mindestens 0,4 g Cl₂/g unbeladene ionische organische Verbindung, bevorzugt mindestens 0,6 g Cl₂/g unbeladene ionische organische Verbindung, besonders bevorzugt mindestens 0,75 g Cl₂/g unbeladene ionische organische Verbindung enthält.

14. Verfahren gemäß einem der Ansprüche 1 bis 13, **dadurch gekennzeichnet, dass** als Speichermedium ein Speichermedium eingesetzt wird, das im beladenen Zustand bei einer Temperatur von 25 °C und einem Druck von 1000±100 hPa flüssig ist.

15. Verfahren zur gezielten Freisetzung von Chlorgas aus einem Chlorspeichermedium, **dadurch gekennzeichnet, dass** das Chlorgas aus einem Speichermedium auf Basis von ionischen organischen Verbindungen enthaltend Polychloride durch die Zugabe eines Freisetzungsmittels in Form von protischer Flüssigkeit, insbesondere wässrigen Lösungen, bevorzugt von Wasser oder wässrigen anorganischen Säuren oder wässrigen organischen Säuren, wässrigen Salzlösungen oder beliebigen Gemischen dieser Flüssigkeiten, freigesetzt wird und das freigesetzte Chlorgas, gegebenenfalls mit Hilfe eines Inertgases, abgeführt wird.

16. Verfahren nach einem der Ansprüche 1 bis 15, **dadurch gekennzeichnet, dass** als Freisetzungsmittel Wasser verwendet wird und pro Äquivalent Chlorspeichermedium im beladenen Zustand, insbesondere als Trichlorid, maximal 6 Äquivalente Wasser bevorzugt, maximal 5 Äquivalente Wasser, besonders bevorzugt, 4 bis 5 Äquivalente Wasser eingesetzt werden.

## Claims

1. Process for reacting chlorine in chemical reactions using chlorine-containing gas with at least one coreactant, **characterized in that** chlorine gas is released from a storage medium based on ionic organic compounds containing polychlorides through the addition of a release agent in the form of a protic liquid, in particular aqueous solutions, preferably of water or aqueous inorganic acids or aqueous organic acids, aqueous salt solutions or any desired mixtures of said liquids, and the chlorine gas released is brought to chemical reaction using chlorine with at least one coreactant.

2. Process according to Claim 1, **characterized in that** the release of chlorine from the storage medium takes place in a release area separate from the reaction area for the chemical reaction with chlorine, preferably takes place in a release area that is in fluid connection, which is able to be closed off, with the reaction area for the chemical reaction with chlorine.

3. Process according to Claim 2, **characterized in that** it uses as storage medium a storage medium that reversibly releases and reabsorbs chlorine and is at the end of release separated from the release agent and in a subsequent step reloaded with chlorine from an external chlorine source.

4. Process according to any of Claims 1 to 3, **characterized in that** the chemical reaction with chlorine is selected from the following series:
organic chlorination reactions, addition reactions, substitution reactions, chlorination for purification of microbially contaminated service water, drinking water or bathing water.

5. Process according to Claim 4, **characterized in that** the microbial contamination of water present in the purification of microbially contaminated service water, drinking water or bathing water is caused by one or more microorganisms from the following series: bacteria, viruses, protozoa, yeasts, fungi or possible spores thereof.

6. Process according to at least one of Claims 1 to 5, **characterized in that** chlorine release occurs through controlled addition of the release agent.

7. Process according to at least one of Claims 1 to 6, **characterized in that** the storage medium comprises a polychloride that is based on an ionic organic compound and that consists at least of an ionic organic compound loaded with chlorine, wherein the cation of the ionic organic compound is in particular selected from the group of one or more in each case differently alkyl- and/or aryl-substituted ammonium, phosphonium, imidazolium, pyridinium and/or guanidinium cations, preferably in each case differently alkyl- and/or aryl-substituted ammonium cations or phosphonium cations.

8. Process according to any of Claims 1 to 7, **characterized in that** the unloaded storage medium comprises at least one ionic organic compound of general formula (I) or (II),
(I) N-R1ₘR2ₙR3ₒ⁺ Cl⁻
(II) P-R4ₚR5_{q}⁺ Cl⁻
preferably ionic compounds of general formula (I), in which the radicals R1, R2, R3, R4, and R5 are each independently identical or different alkyl radicals selected from the following group: methyl, ethyl, n-propyl, isopropyl, n-butyl, isobutyl, and 2-methylpropyl, preferably methyl, ethyl or n-propyl, but with the restriction that at least one radical R1, R2 or R3 is different from the respective other radicals R1, R2, and R3 and that the radicals R4 and R5 are different from one another,
where the characters m, n, o, p, and q are each independently an integer in the series from 0 to 3 and where the sum m+n+o and the sum p+q must result in a value of 4,
and the unloaded storage medium is prior to chlorine release loaded with chlorine.

9. Process according to Claim 8, in which the unloaded storage medium at least comprising at least one ionic compound of formula (I) or formula (II) is first brought into contact with chlorine, in particular at ambient pressure (atmospheric air pressure, e.g. of 1 bar (1000 hPa) at sea level) and the ionic organic compound(s) react to form one or more polychlorides of formula (III) or of formula (IV),
(III) N-R1ₘR2ₙR3ₒ⁺ Cl₍ᵣ₊₂₎⁻
(IV) P-R4ₚR5_{q}⁺ Cl₍ₛ₊₂₎⁻
preferably ionic compounds of general formula (I), in which the radicals R1, R2, R3, R4, and R5 are each independently identical or different alkyl radicals selected from the following group: methyl, ethyl, n-propyl, isopropyl, n-butyl, isobutyl, and 2-methylpropyl, preferably methyl, ethyl or n-propyl, but with the restriction that at least one radical R1, R2 or R3 is different from the respective other radicals R1, R2, and R3 and that the radicals R4 and R5 are different from one another,
where the characters m, n, o, p, and q are each independently an integer in the series from 0 to 3 and where the sum m+n+o and the sum p+q must result in a value of 4,
where r and s are each independently an odd integer from 1 to 7, and preferably r and s are each independently 1 or 3,
and this is followed by release with the release agent.

10. Process according to at least one of Claims 8 to 9, **characterized in that** in the compound of general formula (I) the characters m and n are 1, 2 or 3 and o is 0.

11. Process according to at least one of Claims 9 and 10, **characterized in that** the ionic compound (I) or (II) is selected from at least one compound of the following series: NEtMe₃Cl, NEt₂Me₂Cl, NEt₃MeCl, NBuEt₂MeCl, NMePr₃Cl, NBu₂Me₂Cl, PEt₃MeCl, where the abbreviations Me, Et, Pr, Bu stand for methyl, ethyl, n-propyl, and n-butyl.

12. Process according to either of Claims 9 or 11, **characterized in that** compound (I) is in particular selected from at least one compound of the following series: NEtMe₃Cl, NEt₂Me₂Cl, NEt₃MeCl.

13. Process according to any of Claims 1 to 12, **characterized in that** the storage medium in the loaded state contains at least 0.4 g of Cl₂ per g of unloaded ionic organic compound, preferably at least 0.6 g of Cl₂ per g of unloaded ionic organic compound, more preferably at least 0.75 g of Cl₂ per g of unloaded ionic organic compound.

14. Process according to any of Claims 1 to 13, **characterized in that** it uses as storage medium a storage medium that in the loaded state is liquid at a temperature of 25°C and a pressure of 1000 ± 100 hPa.

15. Process for the selective release of chlorine gas from a chlorine storage medium, **characterized in that** the chlorine gas is released from a storage medium based on ionic organic compounds containing polychlorides through the addition of a release agent in the form of a protic liquid, in particular aqueous solutions, preferably of water or aqueous inorganic acids or aqueous organic acids, aqueous salt solutions or any desired mixtures of said liquids, and the chlorine gas released is conducted away, optionally with the aid of an inert gas.

16. Process according to any of Claims 1 to 15, **characterized in that** water is used as the release agent and that not more than 6 equivalents of water, preferably not more than 5 equivalents of water, more preferably 4 to 5 equivalents of water, are used per equivalent of chlorine storage medium in the loaded state, especially in the form of trichloride.

## Revendications

1. Procédé de transformation de chlore dans des réactions chimiques avec un gaz contenant du chlore avec au moins un partenaire de réaction, **caractérisé en ce que** du chlore gazeux est libéré à partir d'un milieu de stockage à base de composés organiques ioniques contenant des polychlorures par ajout d'un agent de libération sous forme d'un liquide protique, en particulier de solutions aqueuses, préférablement d'eau ou d'acides inorganiques aqueux ou d'acides organiques aqueux, de solutions salines aqueuses ou de mélanges quelconques de ces liquides, et le chlore gazeux libéré est mis en contact avec au moins un partenaire de réaction pour une réaction chimique avec le chlore.

2. Procédé selon la revendication 1, **caractérisé en ce que** la libération du chlore du milieu de stockage a lieu dans un espace de libération distinct de l'espace de réaction de la réaction chimique avec du chlore, préférablement a lieu dans un espace de libération qui est en communication fluidique, qui peut être fermée, avec l'espace de réaction de la réaction chimique.

3. Procédé selon la revendication 2, **caractérisé en ce qu'**en tant que milieu de stockage, un milieu de stockage est utilisé qui libère et reprend le chlore de manière réversible et qui est séparé de l'agent de libération à la fin de la libération et, dans une étape ultérieure, est chargé à nouveau avec du chlore provenant d'une source de chlore externe.

4. Procédé selon l'une quelconque des revendications 1 à 3, **caractérisé en ce que** la réaction chimique avec le chlore est choisie dans la série : réactions de chloration organiques, réactions d'addition, réactions de substitution, chlorage pour le nettoyage d'eau usée, d'eau potable ou d'eau de baignade contaminée par des microbes.

5. Procédé selon la revendication 4, **caractérisé en ce que** la contamination microbiologique de l'eau présente lors du nettoyage d'eau usée, d'eau potable ou d'eau de baignade contaminée par des microbes est provoquée par un ou plusieurs germes de la série : bactéries, virus, protozoaires, levures, champignons ou leurs spores possibles.

6. Procédé selon au moins l'une quelconque des revendications 1 à 5, **caractérisé en ce que** la libération de chlore est réalisée par ajout de manière contrôlée de l'agent de libération.

7. Procédé selon au moins l'une quelconque des revendications 1 à 6, **caractérisé en ce que** le milieu de stockage comprend un polychlorure qui est à base d'un composé organique ionique, et qui est constitué d'au moins un composé organique ionique chargé du chlore, le cation du composé organique ionique étant en particulier choisi dans le groupe d'un ou plusieurs cations ammonium, phosphonium, imidazolium, pyridinium et/ou guanidinium, à chaque fois substitués de manière différente par alkyle et/ou aryle, préférablement des cations ammonium ou phosphonium à chaque fois substitués de manière différente par alkyle et/ou aryle.

8. Procédé selon l'une quelconque des revendications 1 à 7, **caractérisé en ce que** le milieu de stockage non chargé comprend au moins un composé organique ionique de formule générale (I) ou (II),
**(I)** **N-R1ₘR2ₙR3ₒ⁺Cl⁻**
(II) **P-R4ₚR5_{q}⁺ Cl⁻**
préférablement des composés ioniques de formule générale (I),
dans lesquelles les radicaux R1, R2, R3, R4 et R5 signifient indépendamment les uns des autres, de manière identique ou différente, un radical alkyle choisi dans le groupe : méthyle, éthyle, n-propyle, iso-propyle, n-butyle, iso-butyle et 2-méthylpropyle, préférablement méthyle, éthyle ou n-propyle, et cependant de manière limitative au moins un radical R1, R2 ou R3 est différent des autres radicaux respectifs R1, R2 et R3 et les radicaux R4 et R5 sont différents l'un de l'autre,
les indices m, n, o, p et q représentant indépendamment les uns des autres un nombre entier de la série de 0 à 3, la somme de m + n + o et la somme de p + q devant donner le nombre 4,
et le milieu de stockage non chargé est chargé avec du chlore avant la libération de chlore.

9. Procédé selon la revendication 8, dans lequel tout d'abord le milieu de stockage non chargé, au moins contenant au moins un composé ionique de formule (I) ou de formule (II), est mis en contact avec du chlore, en particulier sous pression ambiante (pression atmosphérique par ex. de 1 bar (1 000 hPa) sur NN) et le ou les composés organiques ioniques réagissent pour donner un ou plusieurs polychlorures de formule (III) ou de formule (IV),
**(III)** **N-R1ₘR2ₙR3ₒ⁺Cl₍ᵣ₊₂₎⁻**
**(IV)** **P-R4ₚR5_{q}⁺ Cl₍ₛ₊₂₎⁻**
préférablement des composés ioniques de formule générale (I),
dans lesquelles les radicaux R1, R2, R3, R4 et R5 signifient indépendamment les uns des autres, de manière identique ou différente, un radical alkyle choisi dans le groupe : méthyle, éthyle, n-propyle, iso-propyle, n-butyle, iso-butyle et 2-méthylpropyle, préférablement méthyle, éthyle ou n-propyle, et cependant de manière limitative au moins un radical R1, R2 ou R3 est différent des autres radicaux respectifs R1, R2 et R3 et les radicaux R4 et R5 sont différents l'un de l'autre,
les indices m, n, o, p et q représentant indépendamment les uns des autres un nombre entier de la série de 0 à 3, la somme de m + n + o et la somme de p + q devant donner le nombre 4,
r et s représentant indépendamment l'un de l'autre un nombre entier impair de 1 à 7, préférablement r, s représentant indépendamment l'un de l'autre 1 ou 3,
et ensuite la libération est réalisée avec l'agent de libération.

10. Procédé selon au moins l'une des revendications 8 et 9, **caractérisé en ce que** dans le composé de formule générale (I), les indices m et n représentent 1, 2, 3 et o représente 0.

11. Procédé selon au moins l'une des revendications 9 et 10, **caractérisé en ce que** le composé ionique (I) ou (II) est choisi parmi au moins un composé de la série : NEtMe₃Cl, NEt₂Me₂Cl, NEt₃MeCl, NBuEt₂MeCl, NMePr₃Cl, NBu₂Me₂Cl, PEt₃MeCl, les abréviations Me, Et, Pr, Bu représentant méthyle, éthyle, n-propyle et n-butyle.

12. Procédé selon l'une quelconque des revendications 9 et 11, **caractérisé en ce que** le composé (I) est en particulier choisi parmi au moins un composé de la série : NEtMe₃Cl, NEt₂Me₂Cl, NEt₃MeCl.

13. Procédé selon l'une quelconque des revendications 1 à 12, **caractérisé en ce que** le milieu de stockage contient, à l'état chargé, au moins 0,4 g Cl₂/g de composé organique ionique non chargé, particulièrement au moins 0,6 g Cl₂/g de composé organique ionique non chargé, particulièrement préférablement au moins 0,75 g Cl₂/g de composé organique ionique non chargé.

14. Procédé selon l'une quelconque des revendications 1 à 13, **caractérisé en ce qu'**en tant que milieu de stockage, un milieu de stockage est utilisé qui est liquide à l'état chargé à une température de 25 °C et une pression de 1 000 ± 100 hPa.

15. Procédé pour la libération ciblée de chlore gazeux à partir d'un milieu de stockage de chlore, **caractérisé en ce que** le chlore gazeux est libéré à partir d'un milieu de stockage à base de composés organiques ioniques contenant des polychlorures par l'ajout d'un agent de libération sous forme de liquide protique, en particulier de solutions aqueuses, préférablement d'eau ou d'acides inorganiques aqueux ou d'acides organiques aqueux, de solutions salines aqueuses ou de mélanges quelconques de ces liquides, et le chlore gazeux libéré est évacué, éventuellement à l'aide d'un gaz inerte.

16. Procédé selon l'une quelconque des revendications 1 à 15, **caractérisé en ce que** de l'eau est utilisée en tant qu'agent de libération et au maximum 6 équivalents d'eau, préférablement au maximum 5 équivalents d'eau, particulièrement préférablement 4 à 5 équivalents d'eau sont utilisés par équivalent de milieu de stockage de chlore à l'état chargé, en particulier en tant que trichlorure.
